# EUROPÄISCHE PATENTSCHRIFT

(11) **EP 1 331 331 B1**
(45) Veröffentlichungstag und Bekanntmachung des Hinweises auf die Patenterteilung: **22.10.2008**
(21) Anmeldenummer: 03001467.4
(22) Anmeldetag: 23.01.2003
(51) Int. Cl.: E05B 65/36, E05B 47/00, E05B 17/22, B60R 25/00

(54) **Schliesssystem, insbesondere für ein Kraftfahrzeug**
Locking system, in particular for a motor vehicle
Système de verrouillage, notamment pour un véhicule automobile

(30) Priorität: 23.01.2002 DE 10202329
(43) Veröffentlichungstag der Anmeldung: 30.07.2003
(73) Patentinhaber: Marquardt GmbH, 78604 Rietheim-Weilheim (DE)
(72) Erfinder: Geber, Michael, 72574 Bad Urach (DE); Ruther, Markus, 73760 Ostfildern (DE); Pohlmann, Andreas, 71263 Weil der Stadt (DE); Reinhardt, Matthias, 71067 Sindelfingen (DE); Müller, Karl, 78628 Rottweil-Neufra (DE); Mattes, Johannes, 78567 Fridingen (DE); Hipp, Uwe, 72514 Inzigkofen-Engelwies (DE); Weisser, Dietmar, 78604 Rietheim-Weilheim (DE)
(74) Vertreter: Eisele, Otten, Roth & Dobler

(56) Entgegenhaltungen:
- EP-A- 0 926 024
- EP-A- 1 039 075
- DE-A1- 4 340 260
- DE-A1- 19 725 667
- US-A- 6 037 675

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal zur Authentikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche bedienungsabhängig arbeitende Schließsysteme sind auch mit bedienungsunabhängigen, sogenannten "Keyless"-Funktionalitäten weiterentwickelt. So ist bei der "Keyless Entry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "Keyless Go"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Für die Ermöglichung der Keyless-Funktionalitäten ist der Schlüssel ständig im betriebsbereiten Zustand, so daß der Schlüssel ständig Energie verbraucht. Dieser Energieverbrauch liegt selbst dann vor, wenn der Schlüssel gar nicht benutzt wird. Dies führt wiederum zur raschen Erschöpfung der im Schlüssel befindlichen Batterie.

Der Erfindung liegt die Aufgabe zugrunde, das mit "Keyless"-Funktionalität ausgestattete Schließsystem derart weiterzuentwickeln, daß der Energiebedarf des Schlüssels verringert ist.

Diese Aufgabe wird bei einem gattungsgemäßen Schließsystem durch die kennzeichnenden Merkmale des Anspruchs 1 gelöst.

Beim erfindungsgemäßen Schließsystem ist die als Schlüssel dienende zweite Einrichtung zwischen einem Schlafzustand, bei dem keine bedienungsunabhängige Funktionalität ermöglicht ist, mit verringerter Energieaufnahme und einem Bereitschaftszustand, bei dem eine bedienungsunabhängige Funktionalität wenigstens teilweise ermöglicht ist, umschaltbar. Die zweite Einrichtung weist nun ein Betätigungsorgan auf, dessen Betätigung die zweite Einrichtung vom Schlafzustand wieder in den Bereitschaftszustand zurückführt. Weitere Ausgestaltungen der Erfindung sind Gegenstand der Unteransprüche.

Es bietet sich weiterhin an, die zweite Einrichtung im Schlafzustand weitgehend vollständig abzuschalten. Dann fließen in der zweiten Einrichtung allenfalls Leckströme, womit ein im wesentlichen verschwindender Energieverbrauch für die zweite Einrichtung im Schlafzustand resultiert.

Zweckmäßigerweise handelt es sich bei dem Betätigungsorgan zur Zurückführung der zweiten Einrichtung vom Schlaf- in den Bereitschaftszustand um wenigstens eine der bereits vorhandenen Tasten zur Betätigung der Fernbedienung durch den Benutzer. Bevorzugterweise wird hierfür eine Taste für die bedienungsabhängige Zugangsberechtigung zum Kraftfahrzeug verwendet. Beispielsweise kann es sich um die Taste für die Betätigung der Zentralverriegelung für die Autotüren handeln.

In einer Weiterbildung enthält die zweite Einrichtung einen Zeitmesser. Dieser Zeitmesser ermittelt die Zeit, in der keine Authentikation der zweiten Einrichtung stattgefunden hat. Nach Ablauf einer gewissen Zeit schaltet dann die zweite Einrichtung selbsttätig vom Bereitschafts- in den Schlafzustand um.

Die mit der Erfindung erzielten Vorteile bestehen insbesondere darin, daß eine Energieeinsparung für die zweite Einrichtung bei seltenem Gebrauch erzielbar ist. Insbesondere bei etwaigen Nichtgebrauch der zweiten Einrichtung, beispielsweise wenn sich der Benutzer im Urlaub befindet, wird eine weitgehende Energieeinsparung erreicht. Dadurch wird die Lebensdauer der in der zweiten Einrichtung benötigten Batterie verlängert. Handelt es sich bei der zweiten Einrichtung um einen Ersatzschlüssel, so kann vorteilhafterweise verhindert werden, daß dessen Batterie sich vorzeitig erschöpft und dieser in Notsituationen nicht einsatzbereit ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem, insbesondere mit dessen bedienungsunabhängigen Funktionen,
- Fig. 3: ein schematisches Blockschaltbild des ID-Gebers mit einem Diagramm zur Übertragung der Signale und
- Fig. 4: schematisch das Schließsystem mit dessen bedienungsabhängigen Funktionen.

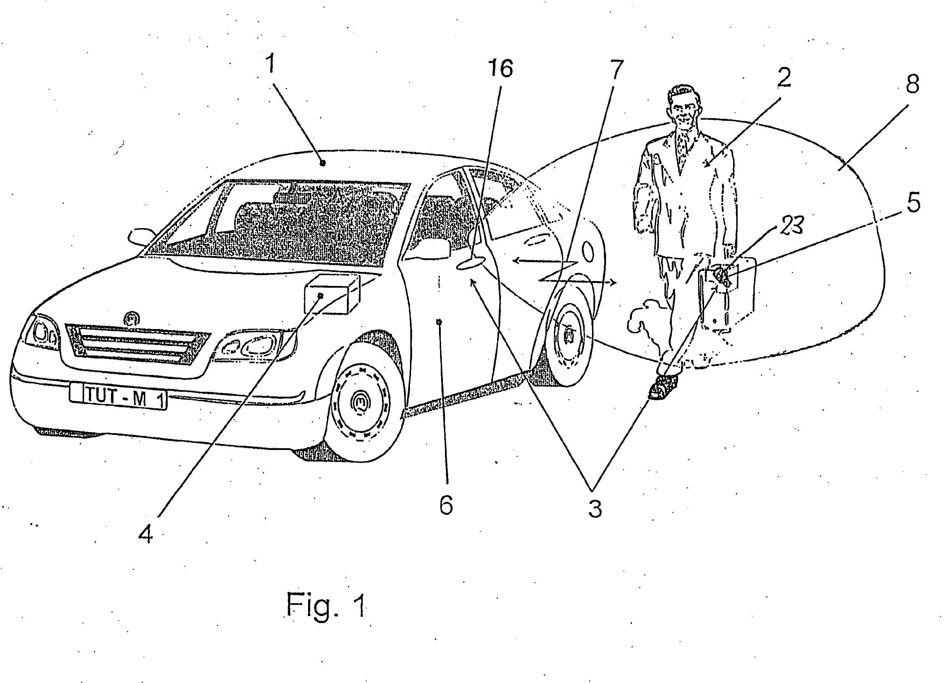

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 bedienungsunabhängig Zugang zum Kraftfahrzeug 1 besitzt.

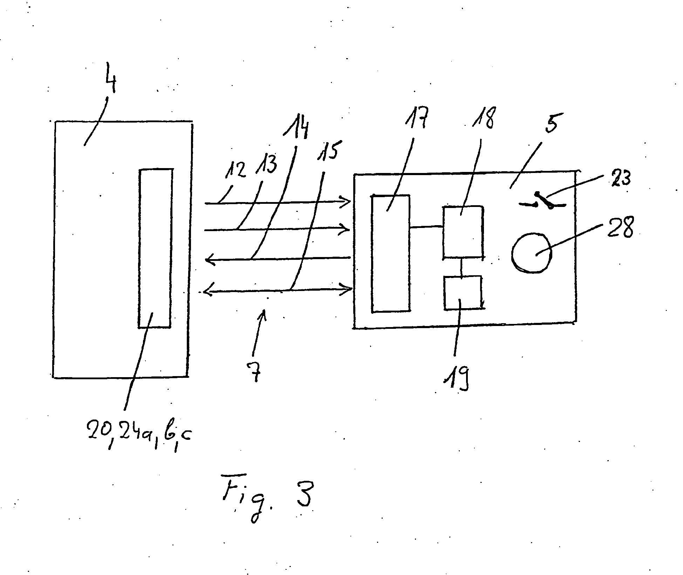

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der Keyless Entry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

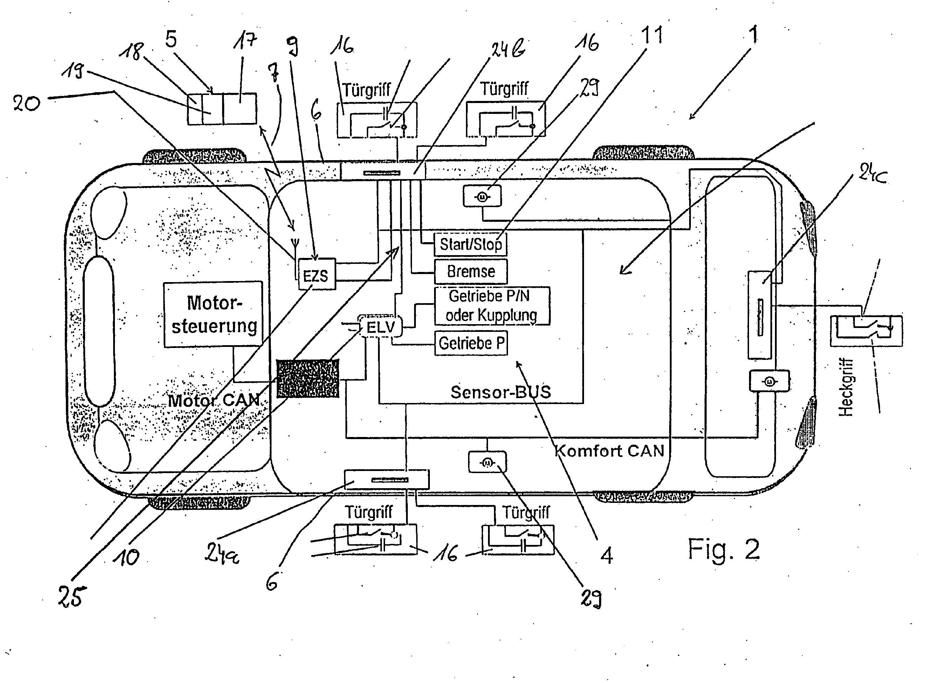

Das Schließsystem 3 stellt weiterhin bedienungsunabhängig die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der Keyless Go-Funktionalität ausgelöst.

Die bedienungsunabhängige Funktionsweise des erfindungsgemäßen Schließsystems 3 soll nun anhand der Fig. 3 näher erläutert werden. Zunächst sendet die erste Einrichtung 4 ein als Wecksignal bezeichnetes elektromagnetisches Signal 12 für die zugehörige zweite Einrichtung 5. Dadurch wird die zweite Einrichtung 5 aus einem Bereitschaftszustand mit verringertem Energiebedarf in einen aktivierten Zustand für den bestimmungsgemäßen Betrieb übergeführt. Danach sendet die erste Einrichtung 4 wenigstens ein weiteres elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle und/oder im Kraftfahrzeug 1 befindlich ist. Nachfolgend sendet die zweite Einrichtung 5 ein die Information zum ermittelteten Standort beinhaltendes weiteres Signal 14 zur ersten Einrichtung 4, das im folgenden auch als Rückantwortsignal bezeichnet ist. Schließlich wird dann, wie bereits beschrieben, das codierte elektromagnetische Betriebssignal 15 zur Authentikation zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild ebenfalls in Fig. 3 gezeigt ist, weist einen Sender/Empfänger 17 und eine beispielsweise aus einem Mikrocomputer bestehende Logikschaltung 18 auf. Zur Energieversorgung des Senders/Empfängers 17 sowie der Logikschaltung 18 ist in der zweiten Einrichtung ein Energiespeicher 28, beispielsweise einer Batterie, befindlich. Die erste Einrichtung 4 enthält beispielsweise zwei Sender 24a, 24b, wie in Fig. 2 zu sehen ist. Je einer dieser Sender 24a, 24b ist im Türbereich des Kraftfahrzeugs 1 angeordnet, und zwar der Sender 24a in der linken und der Sender 24b in der rechten Autotüre 6. Ergänzend kann noch ein weiterer Sender 24c als dritter Sender der ersten Einrichtung 4 im Heckbereich des Kraftfahrzeugs 1 angeordnet sein. Die Sender 24a, b, c dienen vor allem der Übertragung des Wecksignals 12 sowie des Bereichsabgrenzungssignals 13. Weiter enthält die erste Einrichtung 4 einen weiteren Sender/Empfänger 20, der beispielsweise am Zündschloß 9 angeordnet ist. Zwischen dem Sender/Empfänger 20 und dem Sender/Empfänger 17 werden das Rückantwortsignal 14 sowie das Betriebssignal 15 übertragen.

Das Schließsystem 3 besitzt zusätzlich eine nachfolgend näher erläuterte, bedienungsabhängige Zugangs- und/oder Fahrberechtigung, welche vom Benutzer 2 alternativ oder auch bei einem Ausfall der Keyless Entry/Go-Funktionalität eingesetzt werden kann.

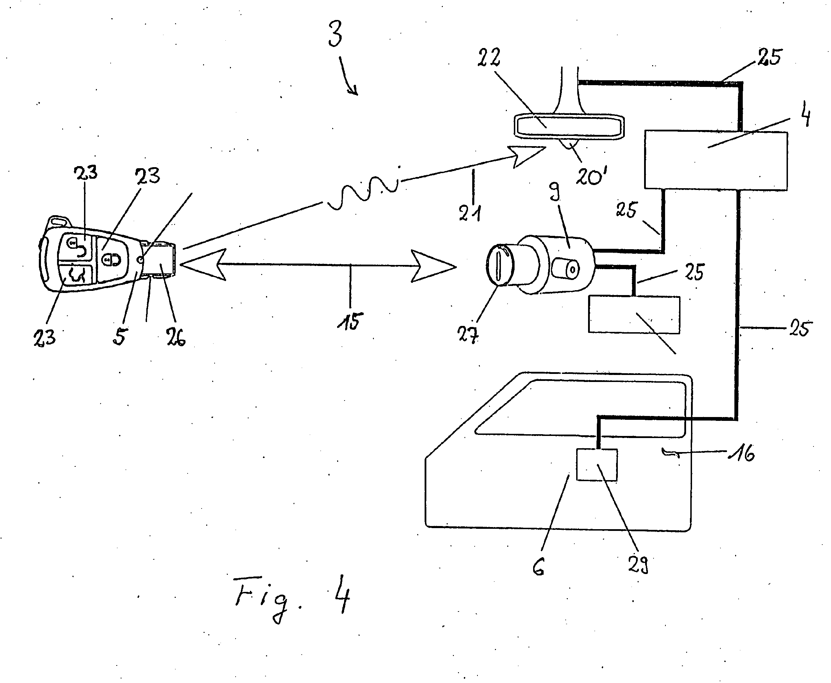

Wie anhand der Fig. 4 zu sehen ist, läßt sich mit Hilfe der in der Art eines elektronischen Schlüssels ausgestalteten zweiten Einrichtung 5 das Schließsystem 3 zur Zugangsberechtigung auch fernbedienbar ansteuern. Im vorliegenden Fall lassen sich die Autotüren 6 des Kraftfahrzeugs 1 fernbedienbar bis zu einer gewissen maximalen Entfernung vom Kraftfahrzeug 1 ver- und entriegeln, d.h. die Zentralverriegelung für die Autotüren 6 läßt sich so durch den Benutzer 2 betätigen.

Hierfür ist zwischen der zweiten Einrichtung 5 und dem in Fig. 2 gezeigten Sender/Empfänger 20 ein codiertes Fernbedienungssignal 21 übertragbar. Selbstverständlich kann auch ein Sender/Empfänger 20' an sonstiger Stelle zentral im Kraftfahrzeug 1 angeordnet sein, beispielsweise am Innenspiegel 22, wie in Fig. 4 zu sehen ist. Als Fernbedienungssignale 21 werden in der Regel elektromagnetische Signale, wie Hf-Signale und/oder Infrarot-Signale o. dgl., verwendet. Die Übertragung des Fernbedienungssignals 21 ist mittels am Gehäuse der zweiten Einrichtung 5 befindlicher, als Tasten ausgestalteter Betätigungsorgane 23 durch den Benutzer 2 auslösbar. Das übertragene Fernbedienungssignal 21 wird dann einer im Kraftfahrzeug 1 befindlichen ersten Einrichtung 4 zugeführt und nach dessen positiver Auswertung, d.h. falls es sich um die berechtigte zweite Einrichtung 5 handelt, wird ein beispielsweise in der jeweiligen Autotüre 6 befindliches Steuergerät 29, das mit der ersten Einrichtung 4 über ein Bussystem 25 in Verbindung steht, zur Ver- oder Entriegelung der Autotüren 6 angesteuert. Bei der in Fig. 4 gezeigten zweiten Einrichtung 5 sind insgesamt drei Tasten 23 vorhanden, und zwar je eine Taste 23 zur Entriegelung und Verriegelung der Autotüren 6 sowie eine weitere Taste 23 für die Öffnung des Kofferraumdeckels.

In Fig. 4 ist weiter die bedienungsabhängige Fahrberechtigung gezeigt. Hierzu wird die zweite Einrichtung 5 mit ihrem Frontteil 26 in eine Aufnahme 27 des gesperrten elektronischen Zündschlosses 9 eingeführt. Bei der Einführung wirkt die zweite Einrichtung 5 auf ein im Zündschloß 9 befindliches Schaltelement, den sogenannten "Schlüssel-steckt"-Schalter, ein. Dadurch wird eine induktive Energieübertragung vom Zündschloß 9 auf die zweite Einrichtung 5 eingeschaltet, so daß die für den bestimmungsgemäßen Betrieb der zweiten Einrichtung 5 benötigte Energie vom Zündschloß 9 geliefert wird. Anschließend tauscht das Zündschloß 9 mit der in der Aufnahme 27 befindlichen zweiten Einrichtung 5 das codierte Betriebssignal 15 aus, wobei es sich beispielsweise um Infrarotsignale handeln kann. Nach positiver Auswertung des übertragenen Betriebssignals 15 ist die Freigabe für das Zündschloß 3 auslösbar. Bei freigegebenem Zündschloß 9 ist dann eine weitere Bewegung der zweiten Einrichtung 5 im Zündschloß 9 zur Inbetriebnahme des Kraftfahrzeugs 1 ermöglicht.

Wie bereits weiter oben näher erläutert, besitzt die zweite Einrichtung 5 einen Bereitschaftszustand, in dem die bedienungsunabhängige Funktionalität wenigstens teilweise ermöglicht ist, mit verringertem Energiebedarf. Allerdings ist im Bereitschaftszustand noch ein gewisser, Energie verzehrender Teilbetrieb der zweiten Einrichtung 5 aufrechterhalten, um das Wecksignal 12 empfangen und verarbeiten zu können. Zur weiteren Energieeinsparung und damit Verlängerung der Lebensdauer des Energiespeichers 28 kann die zweite Einrichtung 5 erfindungsgemäß in einen Schlafzustand umgeschaltet werden. Im Schlafzustand ist keine bedienungsunabhängige Funktionalität ermöglicht und die zweite Einrichtung 5 besitzt dann eine nochmals wesentlich verringerte Energieaufnahme. Allerdings ist im Schlafzustand ein gegebenenfalls von der ersten Einrichtung 4 ausgesandtes Wecksignal 12 wirkungslos. Daher weist die zweite Einrichtung 5 weiter ein Betätigungsorgan 23 auf, dessen Betätigung die zweite Einrichtung 5 vom Schlafzustand in den Bereitschaftszustand zurückführt. Damit kann der Benutzer 2 jederzeit, falls sich die zweite Einrichtung 5 im Schlafzustand befindet, die bedienungsunabhängige Funktionalität mit Hilfe des Betätigungsorgans 23 wieder zuschalten.

Zweckmäßigerweise ist die zweite Einrichtung 5 im Schlafzustand weitgehend vollständig abgeschaltet. Dann fließen im Sender/Empfänger 17 sowie der Logikschaltung 18 der zweiten Einrichtung 5 gemäß Fig. 3 allenfalls Leckströme, womit ein im wesentlichen verschwindender Energieverbrauch resultiert.

Es bietet sich weiter an, daß es sich bei dem Betätigungsorgan 23 zur Zurückführung der zweiten Einrichtung 5 vom Schlaf- in den Bereitschaftszustand um wenigstens eine der in Fig. 4 gezeigten Tasten 23 zur Betätigung der Fernbedienung für die bedienungsabhängige Zugangsberechtigung zum Kraftfahrzeug 1 handelt. Befindet die zweite Einrichtung 5 sich im Schlafzustand, so braucht der Benutzer zur Aktivierung der bedienungsunabhängigen Keyless-Funktionalitäten beispielsweise lediglich die Zentralverriegelung für die Autotüren 6 mittels der Taste 23 zu betätigen.

Schließlich kann es sich noch anbieten, daß die zweite Einrichtung 5 einen in Fig. 3 gezeigten, internen Zeitmesser 19 enthält, wobei der Zeitmesser 19 die selbsttätige Umschaltung der zweiten Einrichtung 5 vom Bereitschafts- in den Schlafzustand auslöst.

Als Kriterium für das automatische Umschalten in den Schlafzustand kann der Ablauf einer vom Zeitmesser 19 festgestellten gewissen Zeit, in der keine Authentikation der zweiten Einrichtung 5 stattgefunden hat, herangezogen werden. So kann die Umschaltung in den Schlafzustand bei einer gewissen Zeitdauer, beispielsweise von drei Tagen, nach Nichtgebrauch der zweiten Einrichtung 5 erfolgen.

Die Erfindung ist nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: Signal / Wecksignal
- 13:: Signal / Bereichsabgrenzungssignal
- 14:: Signal / Rückantwortsignal
- 15:: Signal / (codiertes) Betriebssignal
- 16:: Türgriff
- 17:: Sender/Empfänger (in zweiter Einrichtung)
- 18:: Logikschaltung
- 19:: Zeitmesser
- 20,20':: Sender/Empfänger (in erster Einrichtung)
- 21:: Fernbedienungssignal
- 22:: Innenspiegel
- 23:: Betätigungsorgan / Taste
- 24a,b,c:: Sender (in erster Einrichtung)
- 25:: Bussystem
- 26:: Frontteil (an zweiter Einrichtung)
- 27:: Aufnahme (von Zündschloß)
- 28:: Energiespeicher (in zweiter Einrichtung)
- 29:: Steuergerät (in Autotüre)

## Patentansprüche

1. Schließsystem, insbesondere für die bedienungsunabhängige Zugangs- und/oder Fahrberechtigung in der Art einer Keyless Entry/Go-Funktionalität und/oder für die bedienungsabhängige Zugangs- und/oder Fahrberechtigung bei einem Kraftfahrzeug (1), mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Mittel zum Senden und/oder Empfangen von Signalen besitzen, und wobei es sich insbesondere bei wenigstens einem der zwischen der zweiten Einrichtung (5) und der ersten Einrichtung (4) übertragenen Signale (7) um ein codiertes Betriebssignal (15) zur Authentikation der zweiten Einrichtung (5) handelt, so daß nach positiver Auswertung des übertragenen Betriebssignals (15) bei berechtigter zweiter Einrichtung (5) eine Änderung des Zustandes der ersten Einrichtung (4) bewirkbar ist, **dadurch gekennzeichnet, daß** die zweite Einrichtung (5) zwischen einem Schlafzustand, bei dem keine bedienungsunabhängige Funktionalität ermöglicht ist, mit verringerter Energieaufnahme und einem Bereitschaftszustand, bei dem eine bedienungsunabhängige Funktionalität wenigstens teilweise ermöglicht ist, umschaltbar ist, und daß die zweite Einrichtung (5) ein Betätigungsorgan (23) aufweist, dessen Betätigung die zweite Einrichtung (5) vom Schlafzustand in den Bereitschaftszustand zurückführt.

2. Schließsystem nach Anspruch 1, **dadurch gekennzeichnet, daß** die zweite Einrichtung (5) im Schlafzustand weitgehend vollständig abgeschaltet ist, so daß allenfalls Leckströme mit einem im wesentlichen verschwindenden Energieverbrauch fließen.

3. Schließsystem nach Anspruch 1 oder 2, **dadurch gekennzeichnet, daß** es sich bei dem Betätigungsorgan (23) zur Zurückführung der zweiten Einrichtung (5) vom Schlaf- in den Bereitschaftszustand um wenigstens eine der Tasten zur Betätigung der Fernbedienung, insbesondere für die bedienungsabhängige Zugangsberechtigung zum Kraftfahrzeug (1), beispielsweise für die Betätigung der Zentralverriegelung für die Autotüren (6), durch den Benutzer (2) handelt.

4. Schließsystem nach Anspruch 1, 2 oder 3, **dadurch gekennzeichnet, daß** die zweite Einrichtung (5) einen Zeitmesser (19) enthält, und daß vorzugweise die zweite Einrichtung (5) selbsttätig vom Bereitschafts- in den Schlafzustand umschaltet, insbesondere nach Ablauf einer gewissen Zeit, in der keine Authentikation stattgefunden hat.

## Claims

1. Locking system, in particular for operation-independent access and/or drive authorisation in the form of a keyless entry/go function and/or for operation-dependent access and/or drive authorisation in a motor vehicle (1), with a first device (4) designed as a control device which has at least two operating states, such as a control device for unlocking and/or locking the vehicle doors (6), the ignition lock (9), the steering wheel lock (10), for releasing and/or locking the immobiliser, the engine control device or the like, and with an associated second device (5) designed in the form of an electronic key, an identifier, a chipcard or the like, wherein the two devices (4, 5) for their intended operation have means for transmitting and/or receiving signals, and whereby particularly at least one of the signals (7) transmitted between the second device (5) and the first device (4) is a coded operating signal (15) for the authentication of the second device (5), so that after a positive evaluation of the transmitted operating signal (15) with an authorised second device (5) a change can be made in the state of the first device (4), **characterised in that** the second device (5) can be switched between a resting state, in which no operation-independent functioning is allowed, with reduced power consumption and a state of readiness, in which an operation-independent functioning is at least partly allowed, and **in that** the second device (5) comprises an operating element (23), the actuation of which returns the second device (5) from the resting state into the state of readiness.

2. Locking system according to claim 1, **characterised in that** the second device (5) is almost completely switched off in the resting state, so that leakage currents flow with an essentially diminishing energy consumption.

3. Locking system according to claim 1 or 2, **characterised in that** the actuating element (23) for returning the second device (5) from the resting state to the state of readiness is at least one of the buttons for actuating the remote control, in particular for operation-dependent access authorisation to the motor vehicle (1), for example for actuating the central locking of the vehicle doors (6), by the user (2).

4. Locking system according to claim 1, 2 or 3, **characterised in that** the second device (5) contains a timer (19), and **in that** preferably the second device (5) switches automatically from a state of readiness into the resting state, in particular after the expiry of a specific period during which no authentication has occurred.

## Revendications

1. Système de fermeture notamment pour l'autorisation d'accès et/ou de conduite indépendamment d'une manoeuvre, telle qu'une fonctionnalité de type entrée/marche, sans clef et/ou pour l'autorisation d'accès et/ou de conduite sans manoeuvre pour un véhicule automobile (1) comportant une première installation (4) ayant au moins deux états et réalisée comme installation de commande, telle qu'une installation de commande de déverrouillage et/ou de verrouillage des portières (6) du véhicule, de la serrure de contact (9), du verrouillage du volant de direction (10), de libération et/ou de blocage du verrou de mobilité, de l'appareil de commande du moteur ou analogue ainsi qu'une seconde installation (5) correspondante, réalisée sous la forme d'une clef électronique, d'un générateur ID, d'une carte à puce ou d'un moyen analogue,
les deux installations (4, 5) ayant des moyens pour émettre et/ou recevoir des signaux pour leur fonctionnement déterminé, et
notamment l'un des signaux (7) échangé entre la seconde installation (5) et la première installation (4), est un signal de fonctionnement (15), codé, pour authentifier la seconde installation (5) de sorte qu'après exploitation positive du signal de fonctionnement (15), transmis, lorsque la seconde installation (5) est autorisée, on produit une modification de l'état de la première installation (4),
**caractérisé en ce que**
la seconde installation (5) peut commuter entre un état de sommeil ne permettant aucune fonctionnalité indépendante d'une manoeuvre et correspondant à une consommation d'énergie réduite et un état prêt à fonctionner permettant au moins partiellement une fonctionnalité indépendante d'une manoeuvre, et
la seconde installation (5) comporte un organe d'actionnement (23) dont la manoeuvre fait repasser la seconde installation (5) de l'état de sommeil à l'état prêt à fonctionner.

2. Système de fermeture selon la revendication 1,
**caractérisé en ce que**
à l'état de sommeil la seconde installation (5) est pratiquement complètement coupée de sorte que les éventuels courants de fuite entrainent une consommation d'énergie pratiquement négligeable.

3. Système de fermeture selon la revendication 1 ou 2,
**caractérisé en ce que**
pour faire repasser la seconde installation (5) de son état de sommeil à son état prêt à fonctionner l'organe de manoeuvre (23) est au moins l'une des touches d'actionnement de la télécommande notamment de l'autorisation d'accès indépendamment d'une manoeuvre au véhicule (1) par exemple pour actionner le verrouillage centralisé des portières (6) du véhicule par l'utilisateur (2).

4. Système de fermeture selon les revendications 1, 2 ou 3,
**caractérisé en ce que**
la seconde installation (5) comporte une horloge (19) et de préférence la seconde installation (5) commute automatique de l'état prêt à fonctionner à l'état de sommeil notamment après un certain temps sans authentification.
